# EUROPÄISCHE PATENTSCHRIFT

(11) **EP 1 984 656 B1**
(45) Veröffentlichungstag und Bekanntmachung des Hinweises auf die Patenterteilung: **03.03.2010**
(21) Anmeldenummer: 07726259.0
(22) Anmeldetag: 30.01.2007
(51) Int. Cl.: F16H 61/30, F15B 9/08

(54) **SCHALTVORRICHTUNG FÜR KRAFTFAHRZEUG-WECHSELGETRIEBE**
SHIFTING DEVICE FOR A VARIABLE-SPEED VEHICLE TRANSMISSION
DISPOSITIF DE CHANGEMENT DE VITESSE POUR UNE BOITE DE VITESSES DE VEHICULE AUTOMOBILE

(30) Priorität: 14.02.2006 DE 102006006652
(43) Veröffentlichungstag der Anmeldung: 29.10.2008
(73) Patentinhaber: ZF Friedrichshafen AG, 88038 Friedrichshafen (DE)
(72) Erfinder: FISCHER, Dieter, 88149 Nonnenhorn (DE); SPÄTH, Klaus, 88276 Berg (DE)
(86) Internationale Anmeldenummer: PCT/EP2007/050899
(87) Internationale Veröffentlichungsnummer: WO 2007/101754

(56) Entgegenhaltungen:
- WO-A-2005/119100
- DE-A1- 3 410 802
- DE-A1- 19 539 471
- DE-A1- 19 539 472
- DE-A1- 19 839 854
- DE-A1- 19 840 052
- FR-A- 2 773 751
- FR-A1- 2 588 516
- GB-A- 1 336 877
- US-A- 4 519 294
- US-A- 4 542 662

## Beschreibung

Die Erfindung betrifft eine Schaltvorrichtung mit einer Servounterstützungseinrichtung nach dem Oberbegriff von Anspruch **1**.

Bei derartigen Schaltvorrichtungen dient die Drehbewegung der Schaltstange zur Vorwahl der einzelnen Schaltgassen und erfordert im Allgemeinen keine hohen Schaltkräfte. Die axiale Längsbewegung der Schaltstange dient zum Einlegen des gewünschten Ganges und erfordert insbesondere bei Getrieben für schwere Fahrzeuge und solchen Fahrzeugen, deren Fahrersitz vom Getriebe entfernt angeordnet ist, größere Schaltkräfte.

Heutige Nutzfahrzeuge, wie Omnibusse und Lastkraftwagen, weisen mit ihrer Frontienker-Bauweise räumliche Gegebenheiten für den Einbau des Getriebes auf, bei denen das Getriebe zwangsläufig weit vom Fahrersitz wegrückt. Besonders weit wird die Entfernung bei Fahrzeugen mit Unterflur- oder Heckmotoren. Durch das lange, bisweilen stramm laufende Schaltgestänge oder auch Schaltkabel bei Kabelzugschaltungen bei mechanisch geschalteten Getrieben wird der exakte Gangwechsel oft erschwert.

Damit der Fahrer eines Kraftfahrzeuges seine Aufmerksamkeit voll dem Straßenverkehr zuwenden kann, muss er in allen Tätigkeiten, die zum Führen eines Kraftfahrzeuges notwendig sind, so weit wie möglich entlastet und unterstützt werden.

Jeder Kraftfahrer weiß, wie entscheidend die einwandfreie Bedienung des Schaltgetriebes in schwierigen Verkehrssituationen sein kann. Pneumatische Schalthilfen für Nutzfahrzeuge aller Größenordnungen können hier Abhilfe schaffen.

Bisher bekannte Schaltvorrichtungen mit Servounterstützungseinrichtungen sind teilweise direkt an das Getriebe angebaut und besitzen eine von außen zugängliche Steuerstange und Kolbenstange. Das Schaltgestänge ist mit der Steuerstange verbunden. Über eine Längsbewegung der Steuerstange wird die Unterstützung aktiviert. Diese Art der Ansteuerung findet man in Verbindung mit zwei Stangen- oder Kabelzugschaltungen. Nachteilig ist hierbei die Abdichtung der Steuer- und Kolbenstange über Faltenbälge und die fehlende Schmierung. Im Lkw ist diese Stelle starker Verschmutzung ausgesetzt. Bei Änderung der Schaltgestängeübersetzung ändert sich auch der Beginn der Servounterstützung bzw. diese muss durch Modifikation des Ventils an die Gestängeübersetzung angepasst werden. Das gleiche gilt auch für Schalthilfen, welche aus einem voneinander getrennten Ansteuerventil und Servozylinder bestehen. Ventil und Zylinder sind über Kugelgelenke mit dem Schalthebel und einer Konsole, welche wiederum am Getriebe befestigt ist, verbunden. Diese Anordnung hat zusätzlich noch den Nachteil, dass sich bei jeder Schaltung die Teile relativ zum Getriebe und Fahrzeugrahmen bewegen und somit die Luftleitungen, mit denen Ventil und Zylinder miteinander verbunden sind, durchscheuern können.

Es sind derartige pneumatische Schalthilfen in aufgelöster Bauweise bekannt, die aus einem mechanisch-pneumatischen Steuerteil und einem separaten, pneumatischen Kraftteil bestehen. Eine Schalthilfe in aufgelöster Bauweise ist aus Loomann; Zahnradgetriebe; 2. Auflage; Springer Verlag; 1988; S. 225 bekannt. Der Steuerteil ist ein mechanisch betätigtes Steuerventil, das vom Schaltgestänge betätigt wird. Die Übertragung der Wählbewegung beim Gangwechsel geschieht dabei mechanisch direkt auf das Getriebe. Bei der Übertragung der Schaltbewegung wird das Steuerventil betätigt und gleichzeitig die Handschaltkraft mechanisch über einen Hebel auf das Getriebe übertragen. Die Handschaltkraft wird dabei von einem Druckluftzylinder zusätzlich pneumatisch unterstützt. Dieser Druckluftzylinder bildet dabei als ein Zweistellungs-Zylinder mit integriertem hydraulischem Dämpferden pneumatischen Kraftteil. Eine direkte proportionale Abbildung der Handschaltkraft wird hier nicht erreicht. Die Wege zwischen Steuerteil und Kraftteil sind lang und der Anbau ist Platz raubend. Beschädigungen der Druckluftleitungen zwischen Steuerteil und Kraftteil können nicht vermieden werden.

Aus der DE 195 39 471, die alle Merkmale des Oberbegriffes des unabhängigen Anspruchs 1 offenbart, ist eine Schaltvorrichtung bekannt, bei der das Steuerventil und der Kraftteil in einem Bauteil kombiniert wird. Die Schaltkraft wird je nach Schaltkraft des Fahrers proportional verstärkt und erzielt die gleichen Wirkungen wie bei einem handgeschalteten Getriebe. Der Fahrer verliert nicht das Gespür für die Schaltung, sein Empfinden, ob ein Gang eingelegt ist oder wie lang die Synchronisationsphase andauert, kann er unmittelbar spüren. Bei dieser Schaltvorrichtung bleibt die Ansteuerbarkeit der pneumatischen Unterstützungseinrichtung verbesserungsbedürftig.

Aus der DE 19840052 A1 ist eine Schaltvorrichtung mit einer Servounterstützungseinrichtung bekannt geworden, bei der die von der Unterstützungseinrichtung gelieferte Schaltkraft auf eine axial fest in der Schaltvorrichtung angeordnete Hohlwelle übertragbar ist, die die zentrale Schaltwelle umgibt und die mit der zentralen Schaltwelle zum Schalten der Schaltschienen verdrehbar ist.

Aus der DE 102004042609 A1 sind Kennlinien für eine Servounterstützungseinrichtung für eine Schaltvorrichtung bekannt geworden, die unterschiedliche Steigungen und unterschiedliche Proportionalitäten in Bezug auf die einwirkende Handschaltkraft aufweisen.

Schließlich ist aus der DE 19839854 A1 eine Schaltvorrichtung bekannt geworden, die eine Servounterstützungseinrichtung umfasst. Die DE 19839854 A1 sieht eine Druckbegrenzungseinrichtung vor, die zwischen einem Vorratsbehälter und der Servounterstützungseinrichtung vorgesehen ist. Mit dieser Druckbegrenzungseinrichtung wird die der Unterstützungseinrichtung zugeführte Druckluft begrenzt. Durch eine Begrenzung der Druckluft wird eine Begrenzung der Unterstützungskraft erreicht, um eine Anpassung an zulässige Belastungen in den von der Unterstützungskraft beaufschlagten Bauteilen zu erzielen. Insbesondere wird an den Synchronisiereinrichtungen der einzelnen Gangstufen, die von den Schaltschienen beim Schalten mit Unterstützungskraft betätigt werden, eine Reduzierung der Synchronbelastung ermöglicht. Dadurch werden die Reibflächen zur Angleichung der Drehzahlen in den Synchronisierungen nicht so hoch belastet und erhalten eine höhere Standzeit.
Die gezielte Einstellung kann auch derart vorgesehen sein, dass in verschiedenen Schaltgassen unterschiedlich hohe Unterstützungskräfte zur Verfügung gestellt werden. So sind in den niedrigen Gangstufen die notwendigen Unterstützungskräfte größer als in den höheren Gangstufen, was bei einer gleich hohen Unterstützung entweder zu hohen Synchronbelastungen führen kann, oder andererseits zu einer nicht ausreichenden Unterstützung der Handschaltkraft.

Eine derartig ausgestaltete Schaltvorrichtung ist aufwendig, teuer, benötigt zusätzliche Bauteile und erfüllt die Anforderung an eine variable Begrenzung der Servounterstützungskraft nur unzureichend

Daher liegt der Erfindung die Aufgabe zugrunde, eine Schaltvorrichtung aufzuzeigen, die einen variablen und kostengünstigen Verlauf und Begrenzung der Servounterstützungskraft ermöglicht.

Die Aufgabe wird gelöst durch eine Schaltvorrichtung mit den Merkmalen von Anspruch 1. Ausgestaltungen sind Gegenstand von Unteransprüchen.

Erfindungsgemäß umfasst eine Schaltvorrichtung mit Servounterstützungseinrichtung für ein Getriebe eines Fahrzeuges Mittel zum Wählen und zum Schalten einer Gangstufe des Getriebes und eine Steuerstange der Servounterstützungseinrichtung, auf die eine zu unterstützende Handschaltkraft einwirkt. Dabei sind Mittel vorgesehen, um die auf die Servounterstützungseinrichtung einwirkende Handschaltkraft innerhalb der Servounterstützungseinrichtung selbst und vor und/oder während der Erzeugung der Servounterstützungskraft zu verändern und damit die Servounterstützungseinrichtung in ihrer Wirkung zu beeinflussen.

In einer besonders vorteilhaften Ausgestaltungsform sind die begrenzenden Mittel als mit der Steuerstange zusammenwirkende Federelemente ausgebildet, die unterschiedliche Elastizitäten in einer Betätigungsrichtung oder auch in den beiden Betätigungsrichtungen der Steuerstange aufweisen. Dabei kann in einer Ausführungsform vorgesehen sein, dass die Steuerstange nacheinander bei der Betätigung in eine Betätigungsrichtung mit mehreren Federelementen zusammenwirkt. Als eine vorteilhafte Ausbildung können wenigstens Teile der Federelemente vorgespannt sein.

Eine Ausgestaltungsform der Erfindung sieht vor, dass die Bestätigung der Steuerstange durch Wegbegrenzungsmittel eingeschränkt ist. Dabei kann in vorteilhafter Weise die Einschränkung der Betätigung der Steuerstange durch die Wegbegrenzungsmittel in einer der Betätigungsrichtungen stärker ausgebildet sein, als in die andere Betätigungsrichtung.

In einer weiteren Ausgestaltungsform besteht die Steuerstange aus mehreren Teilen.

Die Erfindung wird anhand einer Zeichnung näher beschrieben.

Es zeigen:
- Fig. 1: eine Schaltanlage nach Stand der Technik;
- Fig. 2: einen Schnitt durch die Schaltvorrichtung;
- Fig. 3: einen Schnitt in Seitenansicht;
- Fig. 4: eine Seitenansicht der Servounterstützungseinrichtung;
- Fig. 5: eine Ausführungsform als Ausschnitt nach Fig. 4;
- Fig. 6: eine weitere Ausführungsform als Ausschnitt nach Fig. 4;
- Fig. 7: eine weitere Ausführungsform als Ausschnitt nach Fig. 4 und
- Fig. 8: Servokennlinienverläufe.

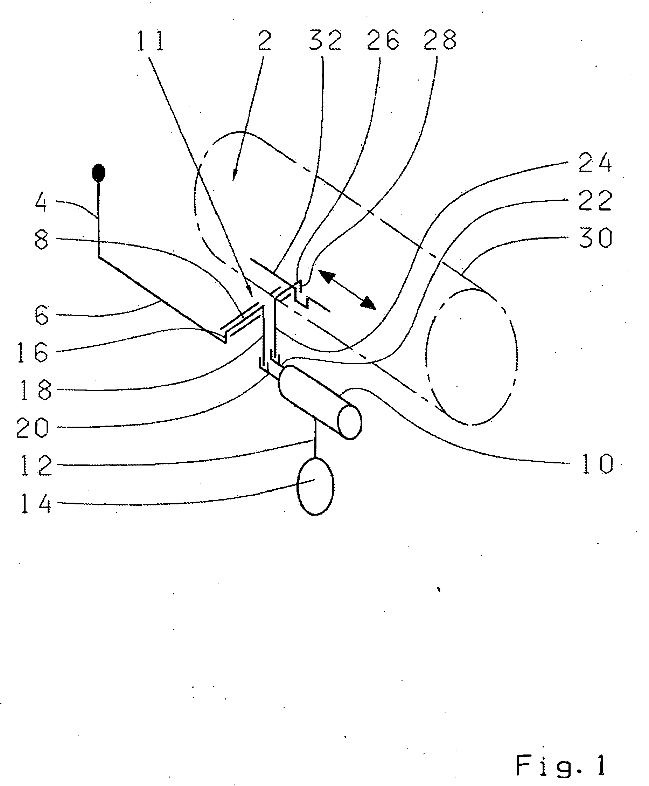

Die Fig. 1 zeigt in einer Skizze die Schaltanlage 2 eines Kraftfahrzeuges nach dem Stand der Technik. Von einem Schalthebel 4 aus führt eine Schaltstange 6 über eine Hebelumlenkung 8 zu einer Schaltvorrichtung 11 mit einer pneumatischen Servounterstützungseinrichtung 10. Die pneumatischen Servounterstützungseinrichtung 10 weist eine Anschlussleitung 12 auf, die zu einem Vorratsbehälter 14 führt, aus dem die pneumatischen Servounterstützungseinrichtung 10 mit Druckluft versorgt wird. Die Hebelumlenkung 8 weist einen ersten Hebel 16 auf, der mit der Schaltstange 6 vorzugsweise gelenkig verbunden ist. Die Hebelumlenkung 8 weist einen zweiten Hebel 18 auf, der wiederum in eine Steuerstange 20 eingreift, die in der pneumatischen Servounterstützungseinrichtung 10 angeordnet ist. Weiterhin ist in der pneumatischen Servounterstützungseinrichtung 10 eine Kolbenstange 22 vorgesehen, in die ein Hebel 24 eingreift, welcher über eine drehbare Schaltwelle 26 mit einem Hebel 28 im Fahrzeuggetriebe 30 verbunden ist. Der Hebel 28 greift in eine Schaltschiene 32 ein, durch die in bekannter Weise Übersetzungsverhältnisse des Getriebes geschaltet werden können. Eine Bewegung des Hebels 24 wird über die Schaltwelle 26 in eine Bewegung des Hebels 28 übertragen, so dass der Hebel 28 die Schaltschiene 32 in eine axiale Bewegung versetzen kann. Bei dieser Bewegung nimmt die Schaltschiene 32 vorzugsweise drei Positionen ein, zwei axiale Endpositionen, die je einem geschalteten Übersetzungsverhältnis entsprechen und eine zwischen den Endpositionen liegende Mittelposition, die einer Neutralstellung des Getriebes entspricht.

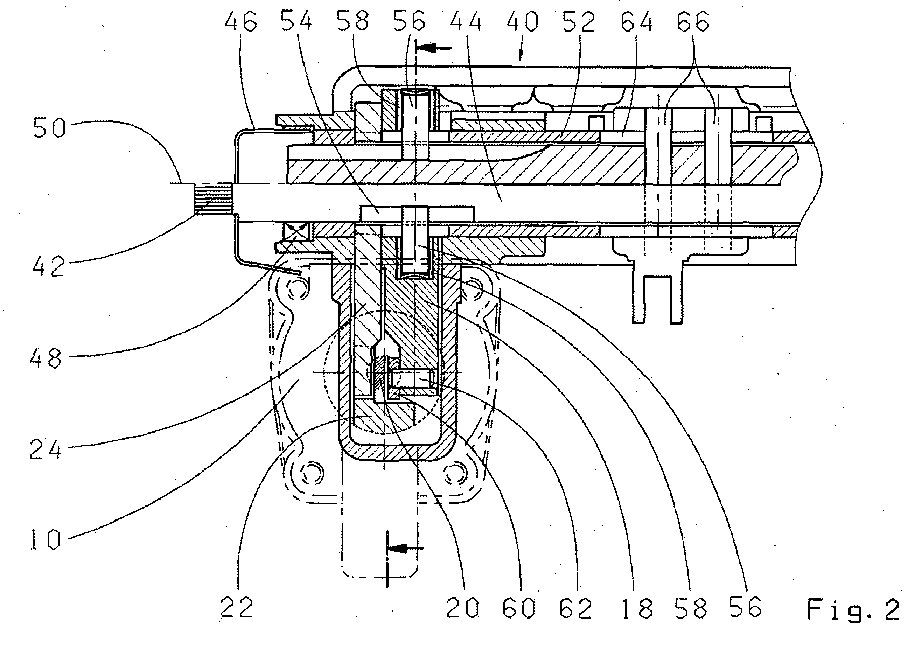

Die Fig. 2 zeigt in einer Draufsicht einen Schnitt durch die erfinderische Schaltvorrichtung 40. Ein hier nicht gezeigter Hebel 16 aus Fig. 1 ist über eine Verzahnung 42 drehfest mit der zentralen Schaltwelle 44 verbunden. Die Schaltwelle 44 greift durch eine Schutzkappe 46 an der Schaltvorrichtung 40 hindurch und wird von einem Wellendichtring 48 an ihrem Umfang abgedichtet. Die Schaltwelle ist um eine Achse 50 drehbar innerhalb einer Hohlwelle 52 gelagert. Die Hohlwelle 52 ist innerhalb der Schaltvorrichtung 40 um die Achse 50 drehbar, aber entlang der Achse 50 axial nicht verschiebbar angeordnet. Die Schaltwelle 44 weist an ihrem Umfang entlang der Achse 50 vorgesehene Nuten 54 auf. In diese Nuten greifen Stifte 56 ein, die ihrerseits in einem Hebel 18 drehbar gelagert sind. Zur Verbesserung der Drehbarkeit sind die Stifte 56 in dem Hebel 18 in Nadelbüchsen 58 gelagert. Die Stifte 56 sind derart in den Nuten 54 angeordnet, dass eine axiale Verschiebung der Schaltwelle 44 entlang der Achse 50 ermöglicht ist, aber eine Verdrehung der Schaltwelle 44 um die Achse 50 ein Verschwenken des Hebels 18 auslöst. Durch die drehbare Lagerung der Stifte 56 werden Reibungsverluste zwischen Stiften 56 und Nuten 54 vermieden und es ist eine leichtgängige axiale Bewegung der Schaltwelle 44 entlang der Achse 50 möglich, selbst wenn die Schaltwelle 44 durch ein Drehmoment beaufschlagt ist, das sich über die Stifte 56 an der pneumatischen Servounterstützungseinrichtung 10 abstützt.

Der Hebel 18 weist eine auf einem Bolzen 62 drehbar angeordnete Rolle 60 auf, die in die Steuerstange 20 der pneumatischen Servounterstützungseinrichtung 10 eingreift. Hierdurch werden Reibungsverluste zwischen dem Hebel 18 und der Steuerstange 20 minimiert, wodurch eine reibungsarme und nahezu verschleißfreie Übertragung der Handschaltkraft auf die pneumatischen Servounterstützungseinrichtung 10 erfolgen kann.
Die von der pneumatischen Servounterstützungseinrichtung 10 erzeugte Verstärkungskraft wird von der Kolbenstange 22 auf den Hebel 24 und von dort auf die Hohlwelle 52 übertragen. Die Hohlwelle 52 weist zwei Langlöcher 64 auf. Durch diese Langlöcher 64 ragen Stifte 66 hindurch, die an dem Hebel 28 befestigt sind, der in die hier nicht gezeigten Schaltschienen 32 eingreift. Die Stifte 66 ragen auch durch Öffnungen in der Schaltwelle 44 hindurch und verdrehen die Schaltwelle 44 und die Hohlwelle 52 gemeinsam. Dabei sind die Öffnungen derart vorgesehen, dass ihre Innenausmaße größer ausgebildet sind als die Außenausmaße der Stifte 66. Dadurch ergibt sich ein geringfügiges Verdrehspiel zwischen der Schaltwelle 44 und der Hohlwelle 52. Hiermit ist sichergestellt, dass über die Schaltwelle 44 und den Hebel 18 die pneumatischen Servounterstützungseinrichtung 10 angesteuert werden kann, ohne dass unmittelbar bereits die Hohlwelle 52 von der Schaltwelle 44 mitgedreht werden muss. Wenn der Verstellweg an der Steuerstange 20 überschritten ist, wird jedoch eine sichere Überbrückung der pneumatischen Servounterstützungseinrichtung 10 erreicht, beispielsweise bei Ausfall der Unterstützung oder wenn bei weiter gesteigerter Handschaltkraft diese direkt auf die Synchronisierungen übertragen wird.
Die Langlöcher 64 in der Hohlwelle 52 ermöglichen die axiale Verschiebung der Schaltwelle 44 innerhalb der Hohlwelle 52 und des Hebels 28 und damit die ungehinderte und unverstärkte Wählbewegung.

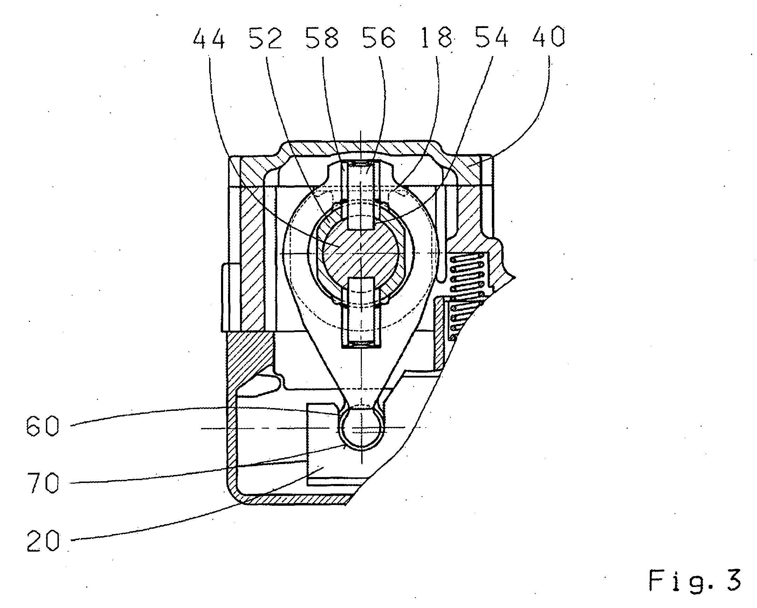

Die Fig. 3 zeigt die Schaltvorrichtung im Schnitt in Seitenansicht. In die Nuten 54 in der Schaltwelle 44 greifen die Stifte 56 ein, die in Nadelbüchsen 58 im Hebel 18 drehbar gelagert sind. Die Schaltwelle 44 wird von der Hohlwelle 52 umschlossen. Der Hebel 18 greift mit einer Rolle 60, die auf einem Bolzen 62 leicht drehbar angeordnet ist, in eine Tasche 70 in der Steuerstange 20 ein und ermöglicht die reibungsarme Übertragung der Handschaltkraft auf die pneumatischen Servounterstützungseinrichtung 10.

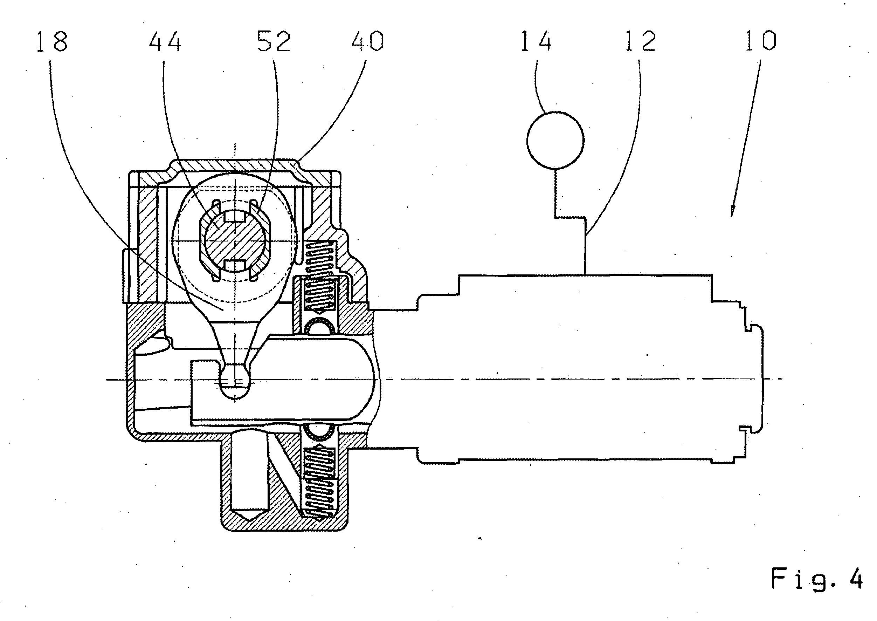

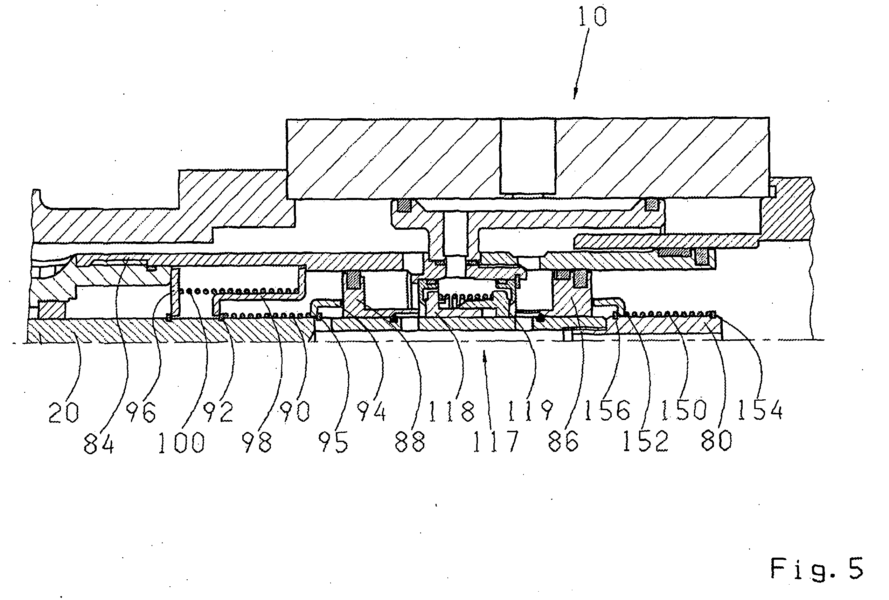

Die Fig. 4 zeigt die Schaltvorrichtung im Schnitt in einer Seitenansicht mit der Servounterstützungseinrichtung 10. Die verwendeten Bezugszeichen entsprechen den Bezugszeichen der anderen Figuren. Der ausgesparte Bereich wird zu Fig.5, 6 und 7 näher beschrieben.

Die Fig. 5 zeigt einen Ausschnitt aus der Servounterstützungseinrichtung 10 in einer erfindungsgemäßen Ausgestaltung. An der Steuerstange ist hier eine Verlängerung 80 vorgesehen. Eine Spiralfeder 90 umgibt die Steuerstange 20 radial und wirkt in axialer Richtung mit einem Anschlag 92 und einem Winkelelement 94 zusammen. Der Anschlag 92 ist an der Steuerstange 20 befestigt an und kann in einer ersten Betätigungsrichtung der Steuerstange 20 verschoben werden. Das Winkelelement 94 liegt an einem Anschlag 95 an der Steuerstange 20 an und kann durch diesen Anschlag 95 in der zweiten Betätigungsrichtung der Steuerstange 20 verschoben werden. Die Betätigungskolben 86, 88 sind auf der Steuerstange 20 verschiebbar angeordnet.

Auf der Steuerstange 20 sind eine Scheibe 96 und ein weiteres Winkelelement 98 vorgesehen, die eine weitere Spiralfeder 100 zwischen sich halten. Die Spiralfedern 90 und 100 weisen unterschiedliche Federraten bzw. Elastizitäten auf. Ebenfalls ist es möglich, dass die Spiralfedern zusammen oder einzeln vorgespannt sind.

Wird nun die Steuerstange 20 durch die Handschaltkraft beaufschlagt, beispielsweise in die Betätigungsrichtung nach rechts in der Zeichnungsebene, so bewegen sich die Steuerstange 20 und die Verlängerung 80 ebenfalls nach rechts. Die Scheibe 96 drückt die Spiralfeder 100 gegen das Winkelelement 98. Das Winkelelement 98 legt sich am umgebenden Gehäuse 84 an, wodurch die Spiralfeder 100 bei Weiterbewegung der Steuerstange 20 komprimiert wird.

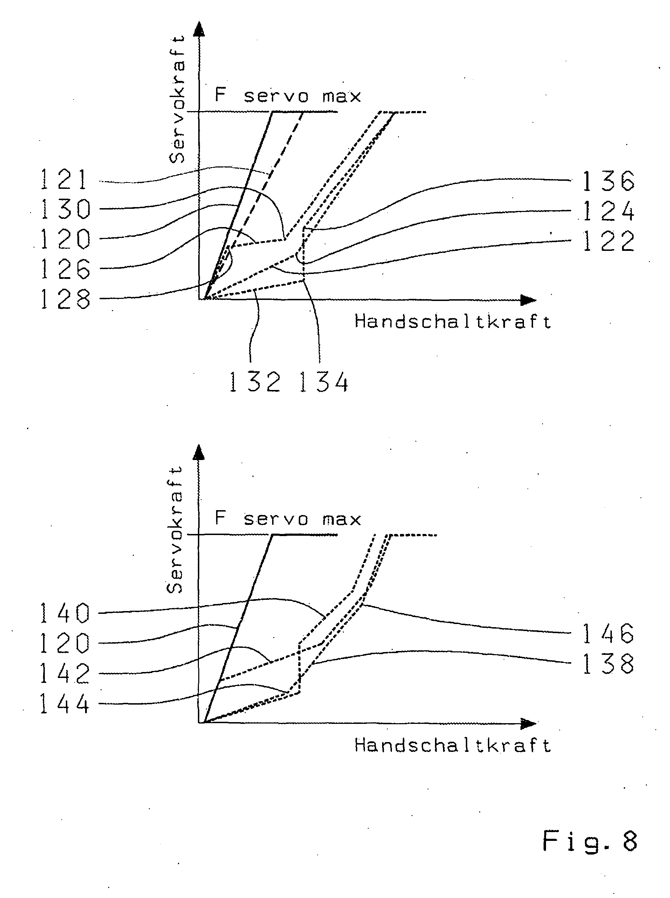

Nach Zurücklegen eines Weges stößt der Betätigungskolben 88 am Ventilschieber 118 an, wonach das Ventil 117 öffnet. Wird nun die Steuerstange 20 durch Erhöhen der Handschaltkraft weiter nach rechts bewegt, so bleibt der Betätigungskolben 88 und der Ventilschieber 118 auf Grund des erreichten Kräftegleichgewichts auf ihren zuvor erreichten geöffneten Positionen stehen, während sich die Steuerstange 20 relativ zu diesen beiden weiterbewegt und die Spiralfeder 90 zwischen Anschlag 92 und Winkelelement 94 weiter komprimiert wird. Dabei stellt sich immer wieder ein neues Kräftegleichgewicht ein, wodurch sich die in Fig. 8 dargestellten Verläufe der Servokraft ergeben. Die Relativbewegung der Steuerstange 20 und damit die Komprimierung der Spiralfeder 90 kann so lange fortgesetzt werden, bis das Verdrehspiel zwischen Schaltwelle 44 und Hohlwelle 52 (Fig. 2 und 3) aufgehoben ist.

Auf der Verlängerung 80 ist eine weitere Spiralfeder 150 angeordnet, die zwischen einem Winkelelement 152 und einem auf der Verlängerung 80 fest angeordneten Anschlag 154 eingeschlossen ist. Das Wickelelement 152 liegt an einem weiteren fest auf der Verlängerung 80 befestigten Anschlag 156 axial an.

Bei der Bewegungg der Steuerstange 20 nach links in der Zeichnungsebene werden entsprechend die Steuerstange 20 und die Verlängerung 80 nach links bewegt. Dabei drückt der Betätigungskolben 86 auf den Ventilschieber 119, wonach das Ventil 117 öffnet. Wird nun die Steuerstange 20 durch Erhöhen der Handschaltkraft weiter nach links bewegt, so bleibt der Betätigungskolben 86 und der Ventilschieber 119 auf Grund des erreichten Kräftegleichgewichts auf ihren zuvor erreichten geöffneten Positionen stehen, während sich die Steuerstange 20 relativ zu diesen beiden weiterbewegt und die Spiralfeder 150 zwischen Anschlag 154 und Winkelelement 152 weiter komprimiert wird. Dabei stellt sich immer wieder ein neues Kräftegleichgewicht ein, wodurch sich die in Fig. 8 dargestellten Verläufe der Servokraft ergeben. Die Relativbewegung der Steuerstange 20 und damit die Komprimierung der Spiralfeder 150 kann so lange fortgesetzt werden, bis das Verdrehspiel zwischen Schaltwelle 44 und Hohlwelle 52 (Fig. 2 und 3) aufgehoben ist.

Anstelle der Winkelelemente 94 und 152, die jeweils auf die Betätigungskolben 88 und 86 einwirken ist es ebenfalls möglich, die Spiralfedern 90 und 150 unmittelbar auf die Betätigungskolben 88 und 86 wirken zu lassen. Dabei kann die Anlage der Spiralfedern 90 und 150 an den Kolbenflächen und an den Anschlägen 92 und 154 durch hier nicht gezeigte Stützscheiben verbessert werden, die an die Durchmesser der Spiralfedern 90 und 150 angepasst sind.

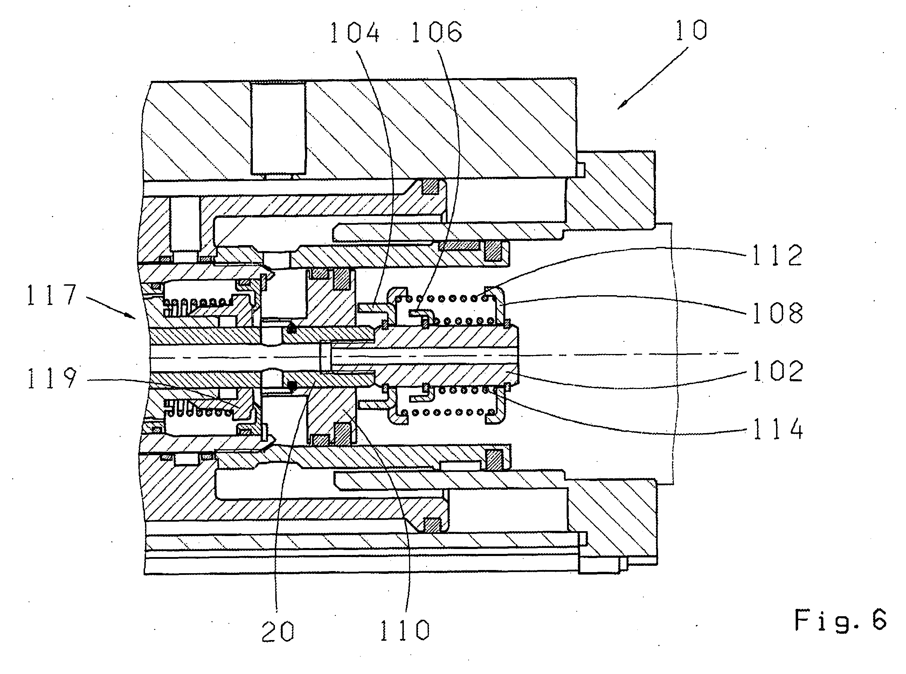

Die Fig. 6 zeigt eine Anordnung, bei der eine Verlängerung 102 an der Steuerstange 20 vorgesehen ist. Die Verlängerung 102 ist mit der Steuerstange fest verbunden, so dass funktionell auch eine einteilige Steuerstange 20 vorgesehen werden kann. Auf der Verlängerung 102 sind drei Winkelelemente 104, 106 und 108 vorgesehen. Das Winkelelement 104 ist in Richtung auf den Betätigungskolben 110 ausgerichtet und ist axial in einer Richtung durch einen Anschlag fixiert. Zwischen dem Winkelelement 104 und dem Winkelelement 108 ist eine Spiralfeder 112 vorgesehen, die vorgespannt oder unvorgespannt im Ruhezustand montiert sein kann. Radial innerhalb der Spiralfeder 112 ist eine Spiralfeder 114 angeordnet, die ebenfalls im Ruhezustand vorgespannt oder unvorgespannt montiert ist. Die Spiralfeder 114 ist zwischen den Winkelelementen 106 und 108 gehalten, die beide über Anschläge einseitig auf der Verlängerung 102 gesichert sind.

Wird die Steuerstange 20 und damit die Verlängerung 102 nach links bewegt, so stößt der Betätigungskolben 110 am Ventilschieber 119 an, wonach das Ventil 117 öffnet. Wird nun die Steuerstange 20 durch Erhöhen der Handschaltkraft weiter nach links bewegt, so bleibt der Betätigungskolben 110 und der Ventilschieber 119 auf Grund des erreichten Kräftegleichgewichts auf ihren zuvor erreichten geöffneten Positionen stehen, während sich die Steuerstange 20 relativ zu diesen beiden weiterbewegt und die Spiralfeder 112 zwischen Winkelelement 104 und Winkelelement 108 solange komprimiert wird, bis das Winkelelement 104 an das Winkelelement 106 anstößt. Danach werden die Druckfedern 112 und 114 gemeinsam komprimiert.

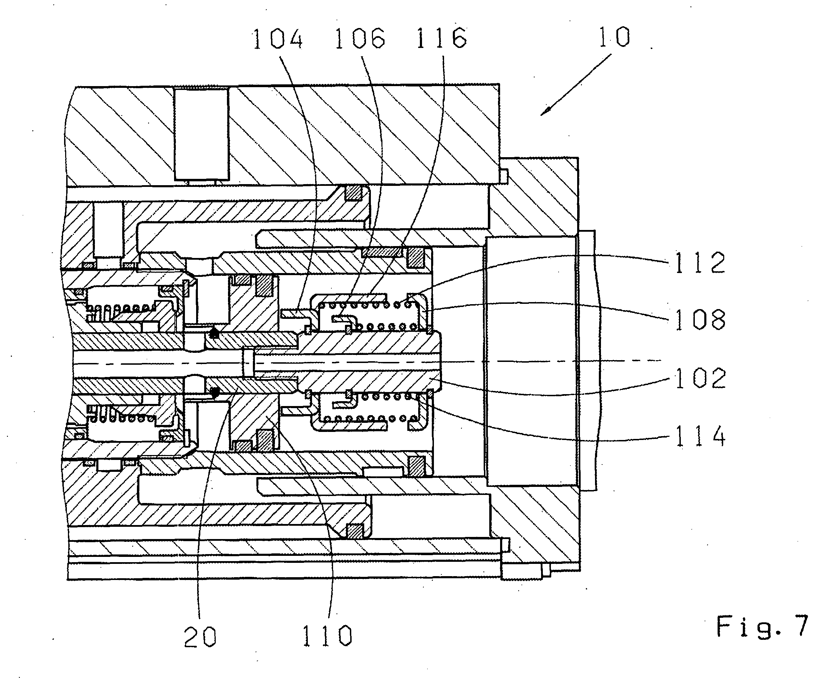

Die Fig. 7 zeigt die Anordnung nach Fig. 6, wobei eine Wegbegrenzung 116 vorgesehen ist, die beispielsweise als eine Verlängerung des Winkelelementes 104 ausgebildet ist und zu einem früheren Anschlag der Winkelelemente 104 und 108 aneinander führt.
Bei Verwendung nur einer Spiralfeder 114 nach Fig. 6 kann auf das mittlere Winkelelement 106 verzichtet werden. Eine Stufung der Elastizitäten wie zu Fig. 6 ist dann nicht möglich.

Die Fig. 8 zeigt schematisch den Verlauf der Servounterstützungskraft aufgetragen über der Handschaltkraft beispielhaft für eine Vielzahl von möglichen Anordnungen.

Die in der Servounterstützungseinrichtung 10 konstruktiv vorgegebene Kennlinie 120 ist linear und verläuft stetig steigend bis sie am Ende des Regelbereichs der Servounterstützungseinrichtung die maximale Servounterstützungskraft erreicht. Diese Kennlinie 120 wäre gegeben wenn keine Elastizität beispielsweise in Form der Federn vorgegeben wäre. Die Kennlinie 121 zeigt den Verlauf bei einer nicht vorgespannten Feder. Die Kennlinie 122 zeigt den Verlauf der Servokraft bei Verwendung von zwei nicht vorgespannten Federn, beispielsweise wie in Fig. 6 angeordnet. Bis zum ersten Knickpunkt 124 wirkt nur die Spiralfeder 112 und von da ab die beiden Spiralfedern 112 und 114. Die Kennlinie 126 zeigt einen alternativen Verlauf der Servokraft bei Verwendung einer vorgespannten und einer nicht vorgespannten Feder. Vom ersten Knickpunkt 128 bis zum zweiten Knickpunkt 130 wirkt zunächst die vorgespannte Feder und von da ab die vorgespannte und die nicht vorgespannte Feder.
Die Kennlinie 132 zeigt einen alternativen Verlauf der Servokraft ebenfalls bei Verwendung einer vorgespannten und einer nicht vorgespannten Feder. Hier wirkt zunächst die nicht vorgespannte Feder bis zum ersten Knickpunkt 134. Vom ersten Knickpunkt 134 bis zum zweiten Knickpunkt 136 wirkt im Wesentlichen die vorgespannte Feder und von da ab die vorgespannte und die nicht vorgespannte Feder.

Im rechten Graph der Fig. 8 sind beispielhafte Kennlinienverläufe aufgetragen unter Verwendung von Wegbegrenzungsmitteln. Im jeweils obersten Abschnitt der Kennlinien 138, 140 und 142 wirken die Wegbegrenzungsmittel, so dass die Kennlinien dann die gleiche Steigung aufweisen wie die unelastische Kennlinie 120.

Die Kennlinie 138 zeigt den Verlauf der Servokraft bei Verwendung von zwei nicht vorgespannten Federn, beispielsweise wie in Fig. 7 angeordnet. Bis zum ersten Knickpunkt 144 wirkt nur die Spiralfeder 112 und von da ab bis zum zweiten Knickpunkt 146 die beiden Spiralfedern 112 und 114. Ab dem Knickpunkt 146 wirkt die Wegbegrenzung 116 und die Handschaltkraft wird mit gleicher Steigung wie die Kennlinie 120 übertragen.
In der Kennlinie 142 wirken zwei vorgespannte Federn bis zum Eingreifen der Wegbegrenzung und in der Kennlinie 140 zunächst eine nicht vorgespannte Feder, dann eine vorgespannte Feder, beide Federn zusammen und schließlich wieder die Wegbegrenzung.

Die in der Fig. 8 gezeigten Verläufe entsprechen im Wesentlichen den Kennlinien bei der Verwendung von Schraubendruckfedern. Bei der Verwendung von anderen elastischen Elementen, wie beispielsweise Tellerfedern, lassen sich Kennlinien in vielfacher Weise einstellen mit sowohl progressiven als auch degressiven Verläufen.

Durch die Begrenzung der einwirkenden Schaltkraft kann auch der in der Servounterstützungseinrichtung erzeugte Druck und dadurch die Servounterstützungskraft beeinflusst werden, so dass sie bestimmte Werte nicht überschreitet.
Durch die Erfindung kann auf die Anordnung teuer Druckbegrenzungsventile gemäß dem Stand der Technik verzichtet werden und für jede Synchronisierung im Getriebe kann eine individuelle Begrenzung der maximal zulässigen Servounterstützungskraft erzielt werden. Einem oder mehreren Gängen kann eine genau definierte Elastizität zugeordnet werden, wodurch die Servounterstützung bis hin zur maximalen Servounterstützungskraft angepasst werden kann.

Erfindungsgemäß verwendbare Mittel, wie beispielsweise Federelemente, können auch durch elastische, nichtmetallische Elemente gebildet werden. Ebenso ist es möglich, die Steuerstange 20 in bestimmten Bereichen elastisch auszubilden.

### Bezugszeichen

- 2: Schaltanlage
- 4: Schalthebel
- 6: Schaltstange
- 8: Hebelumlenkung
- 10: Servounterstützungseinrichtung
- 11: Schaltvorrichtung
- 12: Anschlussleitung
- 14: Vorratsbehälter
- 16: Hebel
- 18: Hebel
- 20: Steuerstange
- 22: Kolbenstange
- 24: Hebel
- 26: Schaltwelle
- 28: Hebel
- 30: Fahrzeuggetriebe
- 32: Schaltschiene
- 40: Schaltvorrichtung
- 42: Verzahnung
- 44: Schaltwelle
- 46: Schutzkappe
- 48: Wellendichtring
- 50: Achse
- 52: Hohlwelle
- 54: Nut
- 56: Stift
- 58: Nadelbüchse
- 60: Rolle
- 62: Bolzen
- 70: Tasche
- 80: Verlängerung
- 84: Gehäuse
- 86: Betätigungskolben
- 88: Betätigungskolben
- 90: Spiralfeder
- 92: Anschlag
- 94: Winkelelement
- 95: Anschlag
- 96: Scheibe
- 98: Wickelelement
- 100: Spiralfeder
- 102: Verlängerung
- 104: Winkelelement
- 106: Wickelelement
- 108: Winkelelement
- 110: Betätigungskolben
- 112: Spiralfeder
- 114: Spiralfeder
- 116: Wegbegrenzung
- 117: Ventil
- 118: Ventilschieber
- 119: Ventilschieber
- 120: Kennlinie
- 122: Kennlinie
- 124: Knickpunkt
- 126: Kennlinie
- 128: Knickpunkt
- 130: Knickpunkt
- 132: Kennlinie
- 134: Knickpunkt
- 136: Knickpunkt
- 138: Kennlinie
- 140: Kennlinie
- 142: Kennlinie
- 144: Knickpunkt
- 146: Knickpunkt
- 150: Spiralfeder
- 152: Winkelelement
- 154: Anschlag
- 156: Anschlag

## Patentansprüche

1. Schaltvorrichtung (11,40) mit Servounterstützungseinrichtung (10) für ein Getriebe (30) eines Fahrzeuges mit Mitteln zum Wählen und zum Schalten einer Gangstufe des Getriebes (30), mit einer Steuerstange (20) der Servounterstützungseinrichtung (10), auf die eine zu unterstützende Handschaltkraft einwirkt, und mit einer Kolbenstange (22), die die unterstützte Handschaltkraft auf die Mittel zum Schalten einer Gangstufe des Getriebes (30) überträgt, wobei die Steuerstange (20) zentral in der Servounterstützungseinrichtung (10) innerhalb eines die Kolbenstange betätigenden Kolbens angeordnet ist, **dadurch gekennzeichnet, dass** die Steuerstange (20) konzentrisch umfassende Mittel (90, 100, 112, 114, 150) vorgesehen sind, die Elastizitäten aufweisen, die bei der Übertragung der auf die Servounterstützungseinrichtung (10) einwirkenden Handschaltkraft zentral innerhalb der Servounterstützungseinrichtung (10) vor und/oder während der Erzeugung der Servounterstützungskraft die Servounterstützungskraft in Abhängigkeit von den Elastizitäten verändern.

2. Schaltvorrichtung (11,40) mit Servounterstützungseinrichtung (10) nach Anspruch 1, **dadurch gekennzeichnet, dass** die Mittel mit der Steuerstange (20) zusammenwirkende Federelementen (90, 100, 112, 114, 150) sind, die unterschiedliche Elastizitäten in einer Betätigungsrichtung der Steuerstange (20) aufweisen.

3. Schaltvorrichtung (11, 40) mit Servounterstützungseinrichtung (10) nach Anspruch 1 oder 2, **dadurch gekennzeichnet, dass** die Mittel mit der Steuerstange (20) zusammenwirkende Federelementen (90, 100, 112, 114,150) sind, die unterschiedliche Elastizitäten in den beiden Betätigungsrichtungen der Steuerstange (20) aufweisen.

4. Schaltvorrichtung (11,40) mit Servounterstützungseinrichtung (10) nach einem der vorherigen Ansprüche, **dadurch gekennzeichnet, dass** die Steuerstange (20) nacheinander bei der Betätigung in eine Betätigungsrichtung mit mehreren Federelementen (90, 100, 112, 114, 150) zusammenwirkt.

5. Schaltvorrichtung (11,40) mit Servounterstützungseinrichtung (10) nach Anspruch 4, **dadurch gekennzeichnet,** das die mehreren Federelemente (90, 100, 112,114, 150) konzentrisch ineinander liegen.

6. Schaltvorrichtung (11, 40) mit Servounterstützungseinrichtung (10) nach einem der Ansprüche 2 bis 5, **dadurch gekennzeichnet, dass** wenigstens Teile der Federelemente (90, 100, 112, 114, 150) vorgespannt sind.

7. Schaltvorrichtung (11, 40) mit Servounterstützungseinrichtung (10) nach einem der vorherigen Ansprüche, **dadurch gekennzeichnet, dass** die Betätigung der Steuerstange (20) durch Wegbegrenzungsmittel (116) eingeschränkt ist.

8. Schaltvorrichtung (11,40) mit Servounterstützungseinrichtung (10) nach Anspruch 7, **dadurch gekennzeichnet, dass** die Einschränkung der Betätigung der Steuerstange (20) durch die Wegbegrenzungsmittel (116) in einer Betätigungsrichtung stärker ausgebildet ist.

9. Schaltvorrichtung (11, 40) mit Servounterstützungseinrichtung (10) nach einem der vorherigen Ansprüche, **dadurch gekennzeichnet, dass** die Steuerstange (20) aus mehreren, fest miteinander verbundenen Teilen (20, 80, 102) besteht.

10. Schaltvorrichtung (11,40) mit Servounterstützungseinrichtung (10) nach einem der Ansprüche 2 bis 5, **dadurch gekennzeichnet, dass** die Federelemente als Spiralfedern (90; 100; 112, 114, 150) ausgebildet sind.

11. Schaltvorrichtung (11,40) mit Servounterstützngseinrichtung (10) nach einem der Ansprüche 2 bis 5, **dadurch gekennzeichnet, dass** die Federelemente (90, 100,112,114,150) als Tellerfedern ausgebildet sind.

12. Schaltvorrichtung (11;40)mit Servounterstützungseinrichtung (10) nach einem der vorherigen Ansprüche, **dadurch gekennzeichnet, dass** die Mittel (90, 100, 112, 114, 150) als elastische, nichtmetallische Elemente ausgebildet sind.

## Claims

1. Shifting device (11, 40) with servo assistance unit (10) for a transmission (30) of a vehicle, having means for selecting and for shifting a gear stage of the transmission (30), having a control rod (20) of the servo assistance unit (10), which control rod (20) is acted on by a manual shift force to be assisted, and having a piston rod (22) which transmits the assisted manual shift force to the means for shifting a gear stage of the transmission (30), with the control rod (20) being arranged centrally in the servo assistance unit (10) within a piston which actuates the piston rod, **characterized in that** means (90, 100, 112, 114, 150) are provided which concentrically surround the control rod (20) and which have elasticities which, during the transmission of the manual shift force acting on the servo assistance unit (10), vary the servo assistance force centrally within the servo assistance unit (10) before and/or during the generation of the servo assistance force, as a function of the elasticities.

2. Shifting device (11, 40) with servo assistance unit (10) according to Claim 1, **characterized in that** the means are spring elements (90, 100, 112, 114, 150) which interact with the control rod (20) and which have different elasticities in one actuating direction of the control rod (20).

3. Shifting device (11, 40) with servo assistance unit (10) according to Claim 1 or 2, **characterized in that** the means are spring elements (90, 100, 112, 114, 150) which interact with the control rod (20) and which have different elasticities in the two actuating directions of the control rod (20).

4. Shifting device (11, 40) with servo assistance unit (10) according to one of the preceding claims, **characterized in that** the control rod (20), during the actuation in one actuating direction, interacts successively with a plurality of spring elements (90, 100, 112, 114, 150).

5. Shifting device (11, 40) with servo assistance unit (10) according to Claim 4, **characterized in that** the plurality of spring elements (90, 100, 112, 114, 150) are situated concentrically one inside the other.

6. Shifting device (11, 40) with servo assistance unit (10) according to one of Claims 2 to 5, **characterized in that** at least parts of the spring elements (90, 100, 112, 114, 150) are preloaded.

7. Shifting device (11, 40) with servo assistance unit (10) according to one of the preceding claims, **characterized in that** the actuation of the control rod (20) is restricted by travel-limiting means (116).

8. Shifting device (11, 40) with servo assistance unit (10) according to Claim 7, **characterized in that** the restriction of the actuation of the control rod (20) by the travel-limiting means (116) is more pronounced in one actuating direction.

9. Shifting device (11, 40) with servo assistance unit (10) according to one of the preceding claims, **characterized in that** the control rod (20) is composed of a plurality of plates (20, 80, 102) which are fixedly connected to one another.

10. Shifting device (11, 40) with servo assistance unit (10) according to one of Claims 2 to 5, **characterized in that** the spring elements are formed as spiral springs (90, 100, 112, 114, 150).

11. Shifting device (11, 40) with servo assistance unit (10) according to one of Claims 2 to 5, **characterized in that** the spring elements (90, 100, 112, 114, 150) are formed as plate springs.

12. Shifting device (11, 40) with servo assistance unit (10) according to one of the preceding claims, **characterized in that** the means (90, 100, 112, 114, 150) are formed as elastic non-metallic elements.

## Revendications

1. Dispositif de changement de vitesse (11, 40) avec un système d'assistance par asservissement (10) pour une boîte de vitesses (30) d'un véhicule avec des moyens pour sélectionner et passer un rapport de vitesse de la boîte de vitesses (30), avec une tige de commande (20) du système d'assistance par asservissement (10), sur laquelle agit une force de changement de vitesse manuelle à assister, et avec une tige de piston (22) qui transfère la force de changement de vitesse manuelle assistée aux moyens pour passer un rapport de vitesse de la boîte de vitesses (30), la tige de commande (20) étant disposée centralement dans le système d'assistance par asservissement (10) à l'intérieur d'un piston actionnant la tige de piston, **caractérisé en ce que** des moyens (90, 100, 112, 114, 150) entourant concentriquement la tige de commande (20) sont prévus, lesquels présentent des élasticités qui, lors du transfert de la force de changement de vitesse manuelle agissant sur le système d'assistance par asservissement (10) centralement à l'intérieur du système d'assistance par asservissement (10) avant et/ou pendant la génération de la force d'assistance par asservissement, modifient la force d'assistance par asservissement en fonction des élasticités.

2. Dispositif de changement de vitesse (11, 40) avec un système d'assistance par asservissement (10) selon la revendication 1, **caractérisé en ce que** les moyens sont des éléments de ressort (90, 100, 112, 114, 150) coopérant avec la tige de commande (20), qui présentent différentes élasticités dans un sens d'actionnement de la tige de commande (20).

3. Dispositif de changement de vitesse (11, 40) avec un système d'assistance par asservissement (10) selon la revendication 1 ou 2, **caractérisé en ce que** les moyens sont des éléments de ressort (90, 100, 112, 114, 150) coopérant avec la tige de commande (20), qui présentent différentes élasticités dans les deux sens d'actionnement de la tige de commande (20).

4. Dispositif de changement de vitesse (11, 40) avec un système d'assistance par asservissement (10) selon l'une quelconque des revendications précédentes, **caractérisé en ce que** la tige de commande (20) coopère successivement lors de l'actionnement dans un sens d'actionnement, avec plusieurs éléments de ressort (90, 100, 112, 114, 150).

5. Dispositif de changement de vitesse (11, 40) avec un système d'assistance par asservissement (10) selon la revendication 4, **caractérisé en ce que** les éléments de ressort (90, 100, 112, 114, 150) sont situés concentriquement les uns dans les autres.

6. Dispositif de changement de vitesse (11, 40) avec un système d'assistance par asservissement (10) selon l'une quelconque des revendications 2 à 5, **caractérisé en ce qu'**au moins des parties des éléments de ressort (90, 100, 112, 114, 150) sont précontraintes.

7. Dispositif de changement de vitesse (11, 40) avec un système d'assistance par asservissement (10) selon l'une quelconque des revendications précédentes, **caractérisé en ce que** l'actionnement de la tige de commande (20) est limité par des moyens de limitation de course (116).

8. Dispositif de changement de vitesse (11, 40) avec un système d'assistance par asservissement (10) selon la revendication 7, **caractérisé en ce que** la limitation de l'actionnement de la tige de commande (20) par les moyens de limitation de course (116) est plus importante dans un sens d'actionnement.

9. Dispositif de changement de vitesse (11, 40) avec un système d'assistance par asservissement (10) selon l'une quelconque des revendications précédentes, **caractérisé en ce que** la tige de commande (20) se compose de plusieurs parties (20, 80, 102) connectées fixement les unes aux autres.

10. Dispositif de changement de vitesse (11, 40) avec un système d'assistance par asservissement (10) selon l'une quelconque des revendications 2 à 5, **caractérisé en ce que** les éléments de ressort sont réalisés sous forme de ressorts à boudin (90, 100, 112, 114, 150).

11. Dispositif de changement de vitesse (11, 40) avec un système d'assistance par asservissement (10) selon l'une quelconque des revendications 2 à 5, **caractérisé en ce que** les éléments de ressort (90, 100, 112, 114, 150) sont réalisés sous forme de ressorts Belleville.

12. Dispositif de changement de vitesse (11, 40) avec un système d'assistance par asservissement (10) selon l'une quelconque des revendications précédentes, **caractérisé en ce que** les moyens (90, 100, 112, 114, 150) sont réalisés sous forme d'éléments élastiques non métalliques.
